# EUROPEAN PATENT SPECIFICATION

(11) **EP 4 470 886 B1**
(45) Date of publication and mention of the grant of the patent: **11.03.2026**
(21) Application number: 24173517.4
(22) Date of filing: 30.04.2024
(51) Int. Cl.: B62D 25/08, B62D 43/08

(54) **FRUNK MOUNTED SPARE WHEEL RETAINER**
HALTERUNG FÜR DAS RESERVERAD IM VORDEREN KOFFERRAUM
SUPPORT DE ROUE DE SECOURS MONTÉ DANS LE COFFRE AVANT

(30) Priority: 18.05.2023 GB 202307442
(43) Date of publication of application: 04.12.2024
(73) Proprietor: Nissan Motor Manufacturing (UK) Limited, Cranfield, Bedfordshire MK43 0DB (GB)
(72) Inventor: Barron, Peter, Cranfield, MK430DB (GB); Strachan, Ken, Cranfield, MK430DB (GB)

(56) References cited:
- JP-A- S61 253 269
- US-A1- 2003 222 433
- US-B2- 7 195 298

## Description

### Technical Field of the Invention

The present invention relates to a frunk. Particularly, the invention concerns a frunk configured to receive and retain a spare wheel; and to a vehicle comprising such a frunk.

### Background to the Invention

As electric motors used in electric vehicles (EVs) are typically more compact than equivalent internal combustion engines (ICEs), EVs having similar layouts to ICE vehicles often have storage space available in front of the passenger compartment. EVs which only have rear mounted motors will have even more storage space available in the front of the vehicle. This storage space is commonly referred to as a frunk (front trunk); and may be suitable for storing a variety of items such as charging cables, or luggage. Typically, the frunk is accessed by opening the bonnet or front lid of the vehicle.

The frunk itself may comprise a storage volume having a frunk liner in the form of a basin with a rim defining an upper opening through which items may be put into or removed from the basin. This liner prevents small items getting lost in the front part of the vehicle. Further storage space may be available between the frunk liner and the front inner body panels.

Spare wheels, whether they are "space savers" or full sized wheels, are often required to be kept inside a road vehicle, so that in emergencies where one of the vehicle tyres becomes unusable, a driver, passenger or roadside assistance provider can replace the damaged wheel and tyre assembly with the spare wheel. Spare wheels are somewhat inconvenient to store, as they are bulky and need to be secured in position to prevent movement during normal vehicle use or in an accident involving the vehicle. In either circumstance, if the tyre/wheel is not secured, it can become damaged or damage adjacent parts of the vehicle.

Conventional methods of storing spare wheels include fastening the spare wheel to a side of the vehicle adj acent to the trunk, or to the 'floor' of the trunk, in a specifically designed recess below the rear luggage board. Storing the spare wheel in or adjacent to the trunk restricts the space remaining for other luggage. This also means, in cases where the spare wheel is required whilst the trunk is laden, that the trunk must be unloaded; which is tiresome, and places an additional burden onto the driver and passengers. Document JP S61 253269 A discloses a frunk according to the preamble of claim 1.

Where spare wheels are stored in frunks, they may be difficult to reach and/or to lift out of the vehicle. It may also be difficult to reach and unfasten devices used to prevent spare wheel movement as described above.

Embodiments of the present invention seek to at least partially overcome or alleviate these and/or other disadvantages outlined above.

### Summary of the Invention

According to a first aspect of the invention there is provided a frunk configured to receive a spare wheel, and a retaining arm for retaining the spare wheel, the retaining arm comprising elastic and rigid portions and an engagement element configured to engage the centre of the spare wheel, wherein the elastic portion is attached to the frunk at a fixed end, and to the rigid portion at an opposite end, the rigid portion comprising a clip at an end distal to the elastic portion, the clip being adapted to releasably grip the spare wheel, and the engagement element is attached to the arm between the elastic and rigid portions.

Provision of a frunk according to the first aspect of the present invention enables a spare wheel to be securely retained within a frunk, in a manner that enables a driver or passenger to easily remove the spare wheel when required. As the spare wheel is retained in a frunk, this allows a greater volume of storage to be available in the rear trunk of the vehicle. The elastic portion enables easier engagement and disengagement of the clip and engagement element, and hence easier securing and removal of the spare wheel. The rigid element and clip holds the retaining arm in position whilst the spare wheel is in place; and facilities manipulation of the engagement between the spare wheel and the engagement element of the retaining arm.

The frunk may be configured to receive a spare wheel by provision of a cavity having substantially the same shape as the spare wheel. The frunk may be arranged such that the plane of the spare wheel is substantially upright when retained within the frunk. This is preferable to horizontal spare wheel storage, as it allows easier access for the user; who is able to grip the upper part of the spare wheel without having to lean so far into the frunk. The frunk will generally define a total volume larger than the cavity configured to receive a spare wheel; this allows luggage to be stored in the frunk, as well as the spare wheel.

A frunk mounted spare wheel will generally be stored in a front part of the frunk which is outside the area enclosed by a frunk liner. This ensures that when a used wheel and tyre is taken off the vehicle and placed in the frunk, it does not soil other luggage.

The elastic portion of the retaining arm may be attached to a lower surface of the frunk. The elastic portion may be attached to a floor of the frunk. Alternatively, the elastic portion may be attached to a surface of the frunk adjacent to the lower surface or floor of the frunk; or to a body panel below the frunk.

The elastic portion may be fixed to the frunk via a retaining bar, which passes through a loop formed in the elastic portion. The loop may be formed in the elastic portion by passing the elastic portion through space between the retaining bar and the surface of the frunk and fixing the elastic portion back onto itself. **In** one embodiment, the fixing of the elastic portion onto itself is performed using rivets. The skilled person will appreciate that many variations are possible.

The elastic portion may be formed from any suitable elastic material. Suitable materials include, but are not limited to, elastomers. The skilled person will appreciate that many suitable alternative elastic materials are available.

The engagement element may comprise a hook adapted to engage with an aperture of the spare wheel. The hook may have a curved profile adapted to match the profile of the aperture. The aperture may be the centre bore of the wheel. **In** alternative embodiments, the aperture may be a lug hole; or an aperture between spokes of the wheel.

**In** some embodiments, the rigid portion may be attached to the elastic portion directly. **In** such embodiments, the engagement element may be attached to either or both of the rigid portion and the elastic portion in the same area. **In** such embodiments, the rigid portion may be attached to the elastic portion by one or more fixing elements. Said fixing elements or different fixing elements may attach the engagement element to either or both of the rigid element and the elastic element. Suitable fixing elements include but are not limited to rivets, bolts, pins, or the like, or any combination thereof.

**In** some embodiments, the rigid portion may be attached to the elastic portion via the engagement element. **In** such embodiments, the rigid portion may be attached to the engagement element by one or more fixing elements. Similarly, the elastic portion may be attached to the engagement element by one or more fixing elements. Suitable fixing elements include but are not limited to rivets, bolts, pins, or the like, or any combination thereof.

Positioning the engagement element where the elastic and rigid portions are attached to each other allows the engagement element to engage the centre of the spare wheel. This also facilitates manipulation of the engagement element by a user holding the rigid portion. This enables the engagement element to be readily engaged with or disengaged from the wheel aperture by the user.

The rigid portion may be formed from any suitable rigid material. Suitable materials include but are not limited to steel, thermoplastic (which may be fibre reinforced composite material), or thermoset material. The skilled person will appreciate that many suitable alternative materials are available.

The retaining arm may have a length substantially the same as the outer diameter of the spare wheel. The elastic portion, when under tension, and the rigid portion may be of substantially equal length to one another. Typically, the length of each may be substantially similar to half of the outer diameter of the spare wheel.

The elastic portion may be between 28 and 36 cm long when not under tension; and between 32 and 40 cm long when it is under tension. The rigid portion may be between 32 and 40 cm long.

The clip may comprise a bridge section, adapted in use to lie across a circumferential surface of the spare wheel. Typically, the circumferential surface may comprise the road engaging tread of a tyre fitted to the spare wheel. In such embodiments, a gripping surface of the bridge section may be adapted to provide a frictional grip on the tyre surface. This may be achieved by the provision of inset and/or protruding gripping elements including but not limited to grooves, ridges, dimples, pimples and the like. Additionally or alternatively, the bridge section can be formed from, or surface coated with, a suitable high friction material such as rubber or the like. A hard foam portion may be used to compensate for changes in wheel diameter caused by tyre tread wear.

The bridge section may be provided with an end rail. The end rail may be adapted to project substantially perpendicular to the bridge section. The end rail may be adapted to grip the sidewall or shoulder of a tyre fitted to the spare wheel. The end rail may be provided with inset and/or protruding gripping elements including but not limited to grooves, ridges, dimples, pimples and the like. Additionally or alternatively, the end rail can be formed from, or surface coated with, a suitable high friction material such as rubber or the like. An additional or alternative end rail may be provided which extends beyond the spare wheel to connect with a locator on a body panel, such as a slam panel, located in front of the frunk.

In use, the bridge section portion may extend substantially perpendicularly to the rigid section of the retaining arm. In some embodiments, the bridge section may be connected to the rigid portion by a pivotable j oint. The pivotable joint may be a hinge or the like. The provision of a pivotable joint facilitates a user fitting or detaching the clip to the spare wheel. The skilled person would however appreciate that a fixed connection could be provided in other embodiments.

The bridge section may be connected directly to the rigid portion. Alternatively, a base rail may extend between the bridge section and the rigid portion. The base rail can in such embodiments effectively space the bridge section from the end of the rigid portion so as to better fit the spare wheel.

The bridge section may comprise an aperture. The aperture may be configured to allow a user to grasp the clip. The clip can thereby also function as a handle for a user to manipulate the retaining arm. This facilitates the user pivoting the clip in order to fit and/or detach it from the spare wheel. It further facilitates user manipulation of the rigid section to engage or disengage the engaging element.

The spare wheel may comprise a wheel matching the wheels fitted to the vehicle; or a steel wheel where the road wheels are aluminium alloy wheels. **In** other embodiments, the spare wheel may have a narrower transverse profile to the wheels fitted to the vehicle. Such narrower wheels are commonly referred to as space savers.

The frunk may comprise a clip holder operable to receive and retain the clip. This allows the user to insert the clip of a retaining arm detached from the spare wheel into the clip holder, to prevent the retaining arm falling into the cavity and interfering with the insertion or removal of the spare wheel. The clip holder may comprise a hook or catch; and may advantageously be mounted on a frunk liner, which would generally be moulded in a plastic material.

**In** some embodiments, the clip holder may comprise a pair of electrical contacts, the electrical contacts being spaced apart and spring biased inwardly relative to one another. The spacing and bias of the electrical contacts may be selected so as to receive and retain a pivot pin or other component of the clip.

Where the pivot pin or other component is formed from an electrically conducting material, the invention may additionally comprise a warning system. The warning system may comprise a detection circuit connected to the electrical contacts, the detection circuit having an output state indicative of whether the clip is positioned between the electrical contacts; and a warning unit operable in response to the output state of the detection circuit.

The detector circuit may comprise a power source. **In** some embodiments, the detector circuit may additionally comprise current/voltage measuring features and/or a logic gate.

The warning unit may be operable to output an alarm in response to the output state of the detection circuit. The alarm may be a visible and/or audible alarm. As necessary, the warning unit may comprise a visual alarm unit and/or an audio alarm unit. Additionally or alternatively, the warning unit may comprise a connection to a visual alarm unit and/or an audio alarm unit.

The visual alarm unit may comprise an indicator light. **In** such embodiments, the visible alarm may comprise illumination of the indicator light. The indicator light can be provided on the dashboard or **HMI** of the vehicle and/or elsewhere on an internal control console and/or adjacent to the spare wheel stowage position. Additionally or alternatively, the visual alarm unit may comprise a vehicle display screen. **In** such embodiments, the visible alarm may comprise display of an icon and/or text on the vehicle display screen. The icon and/or text may correspond to the specific item. Such a screen may be provided on the vehicle dashboard or elsewhere on an internal control console. The purpose of this warning would be to alert the vehicle driver to clip the wheel into the frunk before driving.

The audio alarm may comprise a tone, tone sequence or speech sample output via a loudspeaker. The sampled speech may correspond to the specific item. The loudspeaker may be a dedicated alarm loudspeaker provided on the dashboard of the vehicle and/or elsewhere on an internal control console and/or adjacent to the item stowage position. Alternatively, the loudspeaker may be a loudspeaker of a vehicle audio system. The visible and/or audible alarms may only be activated when the vehicle ignition (ICE engine) or power switch (EV) is turned on.

According to a second aspect of the present invention, there is provided a vehicle comprising the frunk of the first aspect of the present invention.

The vehicle of the second aspect of the present invention may comprise any of the optional features of the first aspect of the present invention.

The vehicle may be an electric vehicle; in particular, an electric vehicle which has at least one traction motor located at the rear of the vehicle, but does not have any traction motor located at the front of the vehicle. The vehicle may comprise a spare wheel stored in the frunk.

### Detailed Description of the Invention

In order that the invention may be more clearly understood, one or more embodiments thereof will now be described, by way of example only, with reference to the accompanying drawings, of which:
- Figure 1: is a front quarter view of a vehicle schematically illustrating the position of a frunk and a spare wheel stored within the frunk according to the present invention;
- Figure 2: is a front view of a retaining arm according to the present invention;
- Figure 3: comprises enlarged side views of (a) the attachment of the retaining arm to the base of a frunk; (b) the engagement element of the retaining arm; and (c) a clip of the retaining arm;
- Figure 4: is a top view of the clip of the retaining arm along arrow IV in Figure 3c;
- Figure 5: is a schematic view of the spare wheel secured in place by the retaining arm, looking back along the vehicle;
- Figure 6a: schematically illustrates a clip holder for receiving and retaining a clip of the retaining arm, looking back along the vehicle; and
- Figure 6b: is a schematic block diagram of an optional warning system used in conjunction with the clip holder.

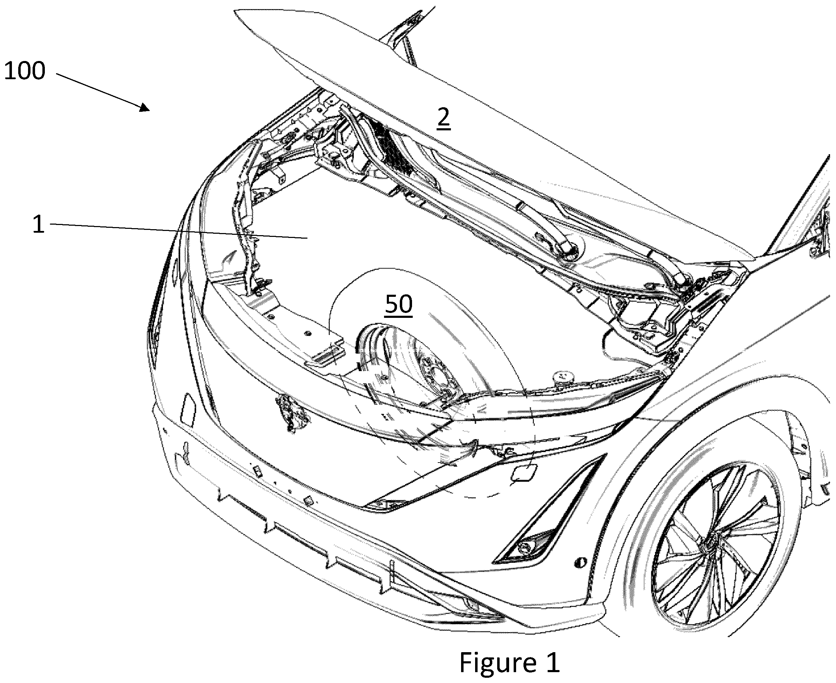

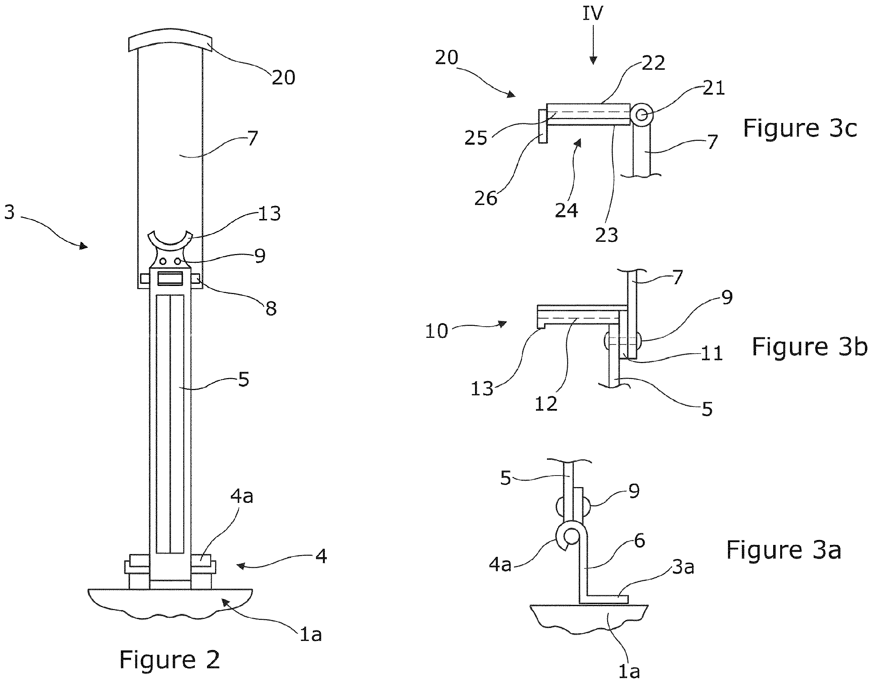

Turning to Figure 1, there is shown schematically a vehicle 100. The vehicle comprises a frunk 1, provided beneath a bonnet 2. The frunk 1 can be accessed by opening/closing the bonnet 2. In general, frunks 1 provide additional storage space within a vehicle 100; particularly an electric motor powered vehicle. In the present instance, notwithstanding any luggage, the frunk 1 is adapted to store a spare wheel 50. As illustrated in Figure 1, the frunk 1 is arranged such that the plane of the spare wheel 50 is substantially upright when placed within the frunk 1. In order to ensure that the spare wheel 50 is securely held within the frunk 1, a retaining arm (3, Fig. 2) is provided according to the present invention.

Turning to Figures 2 and 3a, the frunk 1 has a base 1a upon which is placed a bracket 3a. This bracket may be bolted through the floor of the frunk, or welded to a steel vehicle panel. Bracket 3a is in the form of an L-shaped member extending from the floor 1a of the frunk 1, with its upper end rolled over to define an aperture 4a which retains anchoring bar 4. It will be understood by the skilled person that the aperture 4a could be defined in many ways, for example by providing a linear anchoring bar across a recess (not shown) within the base 1a of the frunk 1.

An end loop of an elastic portion 5 of a retaining arm 3 is provided around the anchoring bar 4. The end loop of the elastic portion 5 is fixed to itself using rivets 9. Accordingly, the elastic portion 5 is secured to the base 1a of the frunk 1.

In this embodiment, the elastic portion 5 is approximately 28 to 36 cm long when not under tension; and is formed from elastic, particularly elastomeric material.

The opposing end of elastic portion 5 is attached to a rigid portion 7 of the retaining arm 3. The rigid portion 7 is approximately the same length as the elastic portion 5 when it is under tension, and is typically formed from steel, aluminium, or plastic (which may be fibre reinforced composite material; comprising a thermoplastic or thermoset base material).

The rigid portion 7 may be attached to the elastic portion 5 using a middle pin 8 and/or a pair of rivets 9. At the fixing between the elastic portion 5 and the rigid portion 7, there is provided an engagement element (10, Fig. 3b).

As seen in Figure 3b, the engagement element 10 comprises a connecting portion 11, through which the middle pin 8 (where fitted) and rivets 9 also pass, thereby fixing the engagement element 10 to the elastic and rigid portions 5, 7. The connecting portion 11 is substantially parallel to the elastic and rigid portions 5, 7. Extending at a right angle to the connecting portion 11 is a spacer 12. At the opposite end of the spacer 12 to the connecting portion 11, a hook 13 projects from the spacer 12. The hook 13 projects substantially parallel to the connecting portion 11. This hook is designed to hook into the centre boss of the spare wheel. The elasticity of portion 5 helps the hook to grip the wheel, whether the tyre on the wheel is inflated or deflated.

At a distal end of the rigid portion 7 to the connection to the elastic portion 5 and the engagement element 10, there is provided a clip 20.

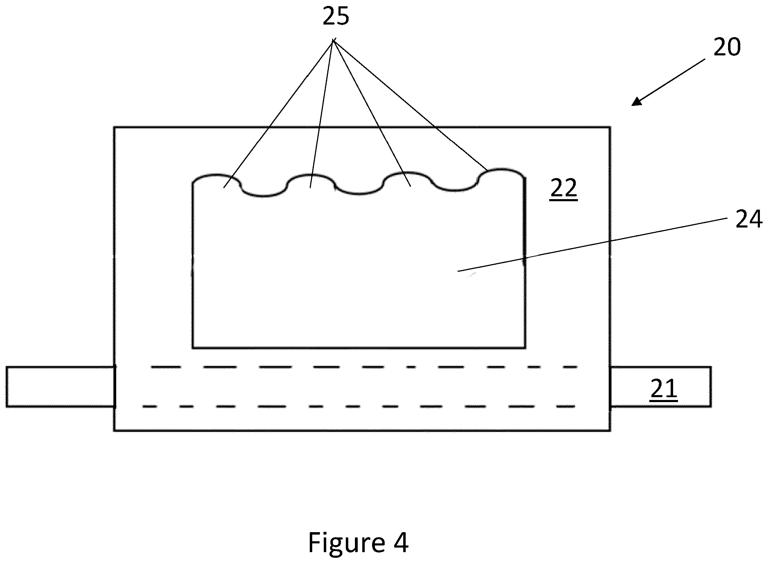

As seen in Figures 3c and 4, the clip 20 is connected to the rigid portion 7 via pivot pin 21, allowing a bridge section 22 of the clip 20 to rotate relative to the rigid portion 7 about said pin 21. The bridge section 22 can have a lower surface 23 configured to grip an upper surface of the spare wheel 50.

The bridge section 22 of the clip 20 has an aperture 24 extending therethrough. Finger grip portions 25 are formed into the aperture 24 to allow a user to easily grip the clip 20. The pin 21 allows a user to pivot the bridge section 22 relative to the rigid portion 7.

Optionally, as shown in Figure 3c, an end rail 26 is provided at a distal end of the clip 20 to the pivot pin 21. The end rail 26 projects substantially perpendicularly to the bridge section 22. The end rail 26 is adapted to grip the sidewall of a tyre fitted to the spare wheel 50.

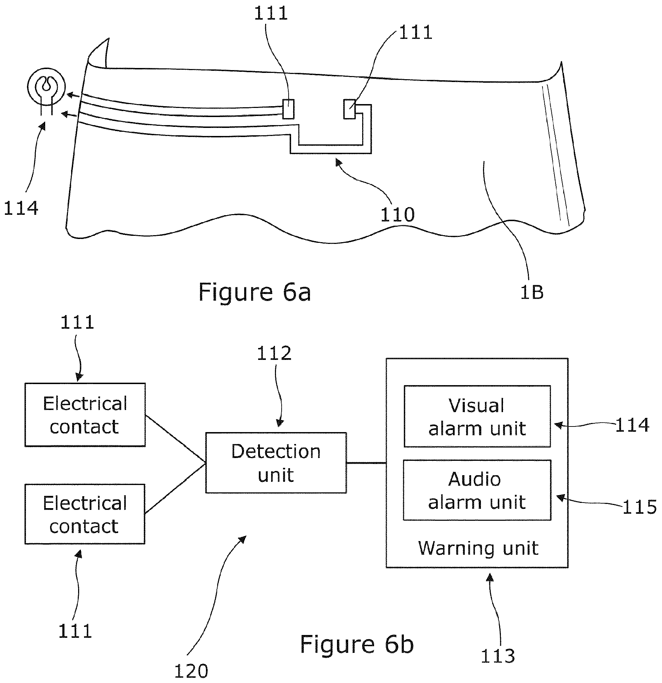

A clip holder 110 is provided on a wall 1B of a liner of the frunk 1 (Fig. 6a). The clip holder 110 can comprise a simple hook or catch adapted to receive and retain the clip 20 generally or the pivot pin 21 specifically. This allows the retaining arm 3 to be held in position away from the spare wheel 50 during insertion/removal of spare wheel 50 from the frunk 1.

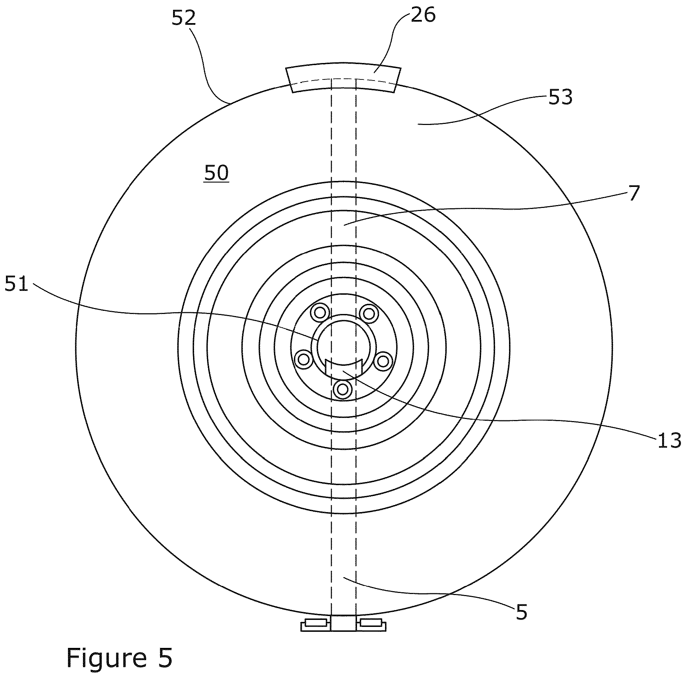

Turning to Figure 5, there is shown a spare wheel 50 retained securely in the frunk 1. The spare wheel 50 is placed within a cavity in the frunk, and the engagement element 10 is placed within the central bore 51 of the spare wheel 50, such that the hook 13 engages and is retained by the central bore 51. The clip 20 is pivoted relative to the rigid portion 7 such that it rests against the road engaging surface 52 of the tyre fitted to spare wheel 50. As illustrated, the end rail 26 extends substantially perpendicularly from the bridge section 22 so as to engage the side wall 53 of the tyre (on the far side of the wheel from the retaining arm).

In use, a user opens the bonnet 2 to access the frunk 1. In the loading scenario, a user places the spare wheel 50 into the frunk 1 and removes the clip 20 from the clip holder 110. The user grips the clip 20, typically using finger grip portions 25. The user can then pull on the clip 20. This pulling force is essentially transferred by the rigid portion 7 to the elastic portion 5, which stretches in response. By varying the pulling force to control the stretch of the elastic portion 5, this allows the engagement element 10 to be brought into alignment with the central bore 51 of the spare wheel 50. This allows the spacer 12 and hook 13 to pass into the central bore 51, so that the hook 13 can engage with the edge of the central bore. This can hold the engagement element 10 (and hence elastic portion 5) in position relative to the spare wheel 50.

Once the engagement element 10 is in place, the user can then pivot the rigid portion 7 into position standing alongside the spare wheel 50. The user can then pivot the bridge section 22 of the clip 20 over the tyre of the spare wheel 50. This allows the end rail 26 to engage with the side wall 53 of the tyre and/or the lower surface 23 of the bridge section 22 to grip an upper surface 52 of the spare wheel 50. Finally, the bonnet 2 is closed, and the user can then drive the vehicle 100 with the spare wheel 50 securely retained within the frunk 1.

In the unloading scenario, a user opens the bonnet 2 to access the frunk 1. Using the finger grips 25 provided in the clip 20, the user can pivot the bridge section 22 of the clip away from the road engaging surface 52 of the tyre. The user can then pull on the clip 20. This pulling force is essentially transferred by the rigid portion 7 to the elastic portion 5, which stretches in response. By varying the pulling force to control the stretch of the elastic portion 5, this allows the engagement element 10 to be unhooked from the central bore 51 of the spare wheel 50.

Once the engagement element 10 is unhooked, the user can insert the clip into the clip holder 110. This holds the retaining arm 3 away from the spare wheel 50. The user is then free to remove the spare wheel 50 from the frunk 1.

It will be understood by the skilled person that differing lengths of elastic portion 5 and rigid portion 7 are possible, provided said lengths allow the retaining arm to function as set out above in relation to a particular spare wheel 50.

In an optional embodiment described further in relation to Figures 6a and 6b, a warning system 120 may be provided to alert a user if clip 20 is left in the clip holder 110. If the vehicle is operated without the retaining arm 3 in position, the spare wheel 50 can move relative to the frunk 1, which can damage the spare wheel 50 and/or frunk 1. In such embodiments, as shown in Figure 6a, the clip holder 110 comprises a pair of electrical contacts 111. The electrical contacts 111 are spaced apart and spring biased inwardly relative to one another. By selecting the spacing and bias force of the contacts 111 appropriately, the contacts can receive and retain therebetween the pivot pin 21. Where the pivot pin 21 is formed from an electrically conducting material, the pivot pin 21 can thereby enable a current to pass between the contacts 111. As a result of the current, warning indicator lamp 114 can be illuminated.

As shown in Figure 6b, the warning system 120 comprises a detection circuit 112 connected to the electrical contacts 111. The detection circuit 112 has an output state indicative of the connection of the electrical contacts 111. For example, the detection circuit 112 is operable to output a signal indicative of whether an electrical current is flowing between the electrical contacts 111. In a very simple example, the detection unit 112 may comprise little more than a power source. In some embodiments, the detector circuit 112 may additionally comprise current/voltage measuring features and/or a basic logic gate.

A warning unit 113 is connected to; and operable in response to; the output state of the detection circuit 112. Based on the output state of the detection circuit 112, the warning unit 113 can output an alarm. Typically, the alarm might be a visible alarm output via a visual alarm unit 114. Optionally, the alarm may be an audible alarm output via an audio alarm unit 115.

The visual alarm 114 unit can be a warning lamp within the vehicle 100. The lamp can be provided in the vicinity of the frunk 1 and/or the lamp can be provided on a warning panel of the vehicle dashboard or **HMI** alongside other such warning lamps. **In a** vehicle 100 fitted with one or more display screens, one display screen can function as the visual alarm unit 114. **In** such examples, the display screen may display constantly or intermittently an icon corresponding to the spare wheel 50. Additionally or alternatively, the display screen may display text identifying the spare wheel 50 and/or text/image outlining the action required to remedy the incorrect stowage. Such additional information may optionally be displayed in response to user input.

The audio alarm unit 115 can be a dedicated loudspeaker within the vehicle 100. The loudspeaker can be provided in the vicinity of the stowed item and/or the loudspeaker can be provided in the passenger compartment. **In** a vehicle fitted with an audio system, the audio system can function as the audio alarm unit 115. The audio alarm can comprise a constant or intermittent tone or series of tones. Additionally or alternatively, the audio alarm can comprise sampled speech identifying the spare wheel 50 and/or outlining the action required to remedy the incorrect stowage. Such additional information may optionally be output in response to user input.

**In** such embodiments, the output alarm can alert the driver to an unsecured spare wheel 50.

The above embodiment is/embodiments are described by way of example only. Many variations are possible without departing from the scope of the invention as defined in the appended claims.

## Claims

1. A frunk (1) configured to receive a spare wheel (50), the frunk comprising a retaining arm (3) for retaining the spare wheel,
**characterized in that**:
the retaining arm comprises elastic (5) and rigid (7) portions and an engagement element (10) configured to engage the centre (51) of the spare wheel, wherein the elastic portion (5) is attached to the frunk (1) at a fixed end, and to the rigid portion (7) at an opposite end, the rigid portion comprising a clip (20) at an end distal to the elastic portion, the clip (20) being adapted to releasably grip the spare wheel (50); and the engagement element (10) is attached to the retaining arm (3) between the elastic and rigid portions.

2. A frunk (1) according to claim 1, wherein the frunk is configured to receive a spare wheel (50) by provision of a cavity having the substantially the same shape as the spare wheel; and wherein the frunk (1) is arranged such that the plane of the spare wheel (50) is substantially upright when retained within the frunk.

3. A frunk (1) according to claim 1 or claim 2, wherein the engagement element (10) comprises a hook (13) adapted to engage with an aperture (51) of the spare wheel (50).

4. A frunk (1) according to claim 3, wherein the hook (13) has a curved profile adapted to match the profile of the aperture (51).

5. A frunk (1) according to any preceding claim, wherein the retaining arm (3) has a length substantially the same as the outer diameter of the spare wheel (50).

6. A frunk (1) according to any preceding claim, wherein the elastic portion (5), when under tension, and the rigid portion (7) are of substantially equal length to one another.

7. A frunk (1) according to any preceding claim, wherein the clip (20) comprises a bridge section (22), adapted in use to lie across a circumferential surface (52) of the spare wheel (50).

8. A frunk (1) according to claim 7, wherein the bridge section (22) is provided with an end rail (26), which end rail is adapted to project substantially perpendicularly to the bridge section.

9. A frunk (1) according to claim 7 or claim 8, wherein the bridge section (22) is connected to the rigid portion (7) by a pivotable joint (21).

10. A frunk (1) according to any one of claims 7 to 9, wherein the bridge section (22) comprises an aperture (24).

11. A frunk (1) according to any preceding claim, wherein the frunk comprises a liner (1B) fitted behind the spare wheel (50); and wherein the frunk liner comprises a clip holder (110) operable to receive and retain the clip (20); and wherein the clip holder comprises a pair of electrical contacts (111), the electrical contacts being spaced apart and spring biased inwardly relative to one another.

12. A vehicle (100) comprising a frunk (1) according to any preceding claim.

13. A vehicle (100) according to claim 12, wherein the elastic portion (5) of the retaining arm (3) is fixed to the frunk (1) by a bracket (3a) or fastener which is secured on or to a body panel (1a).

14. A vehicle (100) according to claim 12 or claim 13, wherein the clip (20) on the rigid portion (7) of the retaining arm (3) is configured to connect with a locator on a body panel in front of the frunk (1).

15. A vehicle (100) according to any one of claims 12 to 14, wherein the vehicle is an electric vehicle having at least one traction motor located at the rear of the vehicle, but does not have any traction motor located at the front of the vehicle.

## Patentansprüche

1. Frontkofferraum (1), der zur Aufnahme eines Reserverads (50) konfiguriert ist, und der einen Haltearm (3) zum Halten des Reserverads umfasst.
**dadurch gekennzeichnet, dass:**
der Haltearm elastische (5) und starre (7) Abschnitte sowie ein Eingriffselement (10) umfasst, das so konfiguriert ist, dass es in die Mitte (51) des Reserverads eingreift, wobei der elastische Abschnitt (5) an einem festen Ende am Frontkofferraum (1) und an einem gegenüberliegenden Ende am starren Abschnitt (7) befestigt ist, wobei der starre Abschnitt an einem vom elastischen Abschnitt entfernten Ende eine Klammer (20) umfasst, wobei die Klammer (20) dazu ausgelegt ist, das Reserverad (50) lösbar zu greifen; und das Eingriffselement (10) zwischen dem elastischen und dem starren Abschnitt am Haltearm (3) befestigt ist.

2. Frontkofferraum (1) nach Anspruch 1, wobei der Frontkofferraum so konfiguriert ist, dass er ein Reserverad (50) aufnehmen kann, indem er einen Hohlraum aufweist, der im Wesentlichen die gleiche Form wie das Reserverad hat; und wobei der Frontkofferraum (1) so angeordnet ist, dass die Ebene des Reserverads (50) im Wesentlichen aufrecht steht, wenn es im Frontkofferraum verstaut ist.

3. Frontkofferraum (1) nach Anspruch 1 oder Anspruch 2, wobei das Eingriffselement (10) einen Haken (13) umfasst, der so ausgelegt ist, dass er in eine Öffnung (51) des Reserverads (50) eingreift.

4. Frontkofferraum (1) nach Anspruch 3, wobei der Haken (13) ein gekrümmtes Profil aufweist, das an das Profil der Öffnung (51) angepasst ist.

5. Frontkofferraum (1) nach einem der vorstehenden Ansprüche, wobei der Haltearm (3) eine Länge aufweist, die im Wesentlichen dem Außendurchmesser des Reserverads (50) entspricht.

6. Frontkofferraum (1) nach einem der vorstehenden Ansprüche, wobei der elastische Abschnitt (5) unter Spannung und der starre Abschnitt (7) im Wesentlichen gleich lang sind.

7. Frontkofferraum (1) nach einem der vorstehenden Ansprüche, wobei die Klammer (20) einen Brückenabschnitt (22) umfasst, der so ausgelegt ist, dass er beim Verwenden über einer Umfangsoberfläche (52) des Reserverads (50) liegt.

8. Frontkofferraum (1) nach Anspruch 7, wobei der Brückenabschnitt (22) mit einer Endschiene (26) versehen ist, die so ausgelegt ist, dass sie im Wesentlichen senkrecht zum Brückenabschnitt vorsteht.

9. Frontkofferraum (1) nach Anspruch 7 oder Anspruch 8, wobei der Brückenabschnitt (22) über ein schwenkbares Gelenk (21) mit dem starren Abschnitt (7) verbunden ist.

10. Frontkofferraum (1) nach einem der Ansprüche 7 bis 9, wobei der Brückenabschnitt (22) eine Öffnung (24) umfasst.

11. Frontkofferraum (1) nach einem der vorstehenden Ansprüche, wobei der Frontkofferraum eine hinter dem Reserverad (50) angebrachte Auskleidung (1B) umfasst; und wobei die Verkleidung des Frontkofferraums einen Cliphalter (110) umfasst, der dazu dient, den Clip (20) aufzunehmen und zu halten; und wobei der Cliphalter ein Paar elektrischer Kontakte (111) umfasst, wobei die elektrischen Kontakte voneinander beabstandet sind und relativ zueinander nach innen vorgespannt sind.

12. Fahrzeug (100) umfassend einen Frontkofferraum (1) nach einem der vorstehenden Ansprüche.

13. Fahrzeug (100) nach Anspruch 12, wobei der elastische Abschnitt (5) des Haltearms (3) durch eine Halterung (3a) oder eine Befestigung, die an einer Karosserieverkleidung (1a) befestigt ist, am Frontkofferraum (1) fixiert ist.

14. Fahrzeug (100) nach Anspruch 12 oder Anspruch 13, wobei die Klammer (20) am starren Abschnitt (7) des Haltearms (3) so konfiguriert ist, dass sie mit einer Positionierungsvorrichtung an einer Karosserieverkleidung vor dem Frontkofferraum (1) verbunden werden kann.

15. Fahrzeug (100) nach einem der Ansprüche 12 bis 14, wobei es sich bei dem Fahrzeug um ein Elektrofahrzeug mit mindestens einem Traktionsmotor handelt, der sich am Heck des Fahrzeugs befindet, jedoch kein Traktionsmotor an der Vorderseite des Fahrzeugs vorhanden ist.

## Revendications

1. Coffre avant (1) conçu pour recevoir une roue de secours (50), le coffre avant comprenant un bras de retenue (3) pour retenir la roue de secours,
**caractérisé en ce que** :
le bras de retenue comprend des parties élastique (5) et rigide (7) et un élément de mise en prise (10) conçu pour venir en prise avec le centre (51) de la roue de secours, dans lequel la partie élastique (5) est fixée au coffre avant (1) à une extrémité fixe, et à la partie rigide (7) à une extrémité opposée, la partie rigide comprenant un clip (20) à une extrémité distale par rapport à la partie élastique, le clip (20) étant adapté pour saisir de manière libérable la roue de secours (50) ; et l'élément de mise en prise (10) est fixé au bras de retenue (3) entre les parties élastique et rigide.

2. Coffre avant (1) selon la revendication 1, dans lequel le coffre avant est conçu pour recevoir une roue de secours (50) par la fourniture d'une cavité ayant sensiblement la même forme que la roue de secours ; et dans lequel le coffre avant (1) est agencé de telle sorte que le plan de la roue de secours (50) est sensiblement vertical lorsqu'elle est retenue à l'intérieur du coffre avant.

3. Coffre avant (1) selon la revendication 1 ou la revendication 2, dans lequel l'élément de mise en prise (10) comprend un crochet (13) adapté pour venir en prise avec une ouverture (51) de la roue de secours (50).

4. Coffre avant (1) selon la revendication 3, dans lequel le crochet (13) a un profil incurvé adapté pour correspondre au profil de l'ouverture (51).

5. Coffre avant (1) selon l'une quelconque revendication précédente, dans lequel le bras de retenue (3) a une longueur sensiblement identique au diamètre externe de la roue de secours (50).

6. Coffre avant (1) selon l'une quelconque revendication précédente, dans lequel la partie élastique (5), lorsqu'elle est sous tension, et la partie rigide (7) sont de longueur sensiblement égale l'une à l'autre.

7. Coffre avant (1) selon l'une quelconque revendication précédente, dans lequel le clip (20) comprend une section de pont (22), adaptée pour, lors de l'utilisation, reposer en travers d'une surface circonférentielle (52) de la roue de secours (50).

8. Coffre avant (1) selon la revendication 7, dans lequel la section de pont (22) est pourvue d'un rail d'extrémité (26), lequel rail d'extrémité est adapté pour faire saillie sensiblement perpendiculairement à la section de pont.

9. Coffre avant (1) selon la revendication 7 ou la revendication 8, dans lequel la section de pont (22) est reliée à la partie rigide (7) par une articulation pivotante (21).

10. Coffre avant (1) selon l'une quelconque des revendications 7 à 9, dans lequel la section de pont (22) comprend une ouverture (24).

11. Coffre avant (1) selon l'une quelconque revendication précédente, dans lequel le coffre avant comprend une garniture (1B) montée derrière la roue de secours (50) ; et dans lequel la garniture de coffre avant comprend un support de clip (110) pouvant être utilisé pour recevoir et retenir le clip (20) ; et dans lequel le support de clip comprend une paire de contacts électriques (111), les contacts électriques étant espacés et sollicités par un ressort vers l'intérieur l'un par rapport à l'autre.

12. Véhicule (100) comprenant un coffre avant (1) selon l'une quelconque revendication précédente.

13. Véhicule (100) selon la revendication 12, dans lequel la partie élastique (5) du bras de retenue (3) est fixée au coffre avant (1) par un support (3a) ou un élément de fixation qui est solidement fixé sur ou à un panneau de carrosserie (1a).

14. Véhicule (100) selon la revendication 12 ou la revendication 13, dans lequel le clip (20) sur la partie rigide (7) du bras de retenue (3) est conçu pour se lier à un élément de positionnement sur un panneau de carrosserie devant le coffre avant (1).

15. Véhicule (100) selon l'une quelconque des revendications 12 à 14, dans lequel le véhicule est un véhicule électrique ayant au moins un moteur de traction situé à l'arrière du véhicule, mais n'ayant pas de moteur de traction situé à l'avant du véhicule.
